# EUROPEAN PATENT APPLICATION

(11) **EP 3 757 907 A1**
(43) Date of publication of application: **30.12.2020**
(21) Application number: 20151093.0
(22) Date of filing: 10.01.2020
(51) Int. Cl.: G06N 5/00, G06N 5/02, G06F 17/11

(54) **HEURISTIC METHODS OF CONVERTING HIGHER ORDER TO QUADRATIC POLYNOMIALS IN BINARY SPACES**

(30) Priority: 25.06.2019 US 201916452342
(71) Applicant: FUJITSU LIMITED, Kanagawa 211-8588 (JP)
(72) Inventor: MANDAL, Avradip, Sunnyvale, California 94085 (US); ROY, Arnab, Sunnyvale, California 94085 (US); UPADHYAY, Sarvagya, Sunnyvale, California 94085 (US); USHIJIMA-MWESIGWA, Hayato, Sunnyvale, California 94085 (US)
(74) Representative: Haseltine Lake Kempner LLP

(57) **Abstract**

A method of converting a HOBO problem into a QUBO problem. The method may include creating a data structure of key-value pairs by sorting the plurality of indices of the variables of the HOBO problem, the key in each key-value pair corresponding to combinations of quadratic terms appearing in the HOBO and the value corresponding to all terms of at least degree three that contain the associated key. For each key of the data structure, a quadratization process is performed including identifying a key with the largest number of associated values, replacing the identified key with an auxiliary variable, and updating the data structure so as to correspond with the replacement of the auxiliary variable, storing the auxiliary variable and a quadratic term the auxiliary variable replaced as a pair in a data map. The method may also include constructing a quadratic polynomial for each pair in the data map.

## Description

The embodiments discussed in the present disclosure are related to heuristic methods of converting higher order polynomials to quadratic polynomials in binary spaces.

### BACKGROUND

Higher order binary optimization (HOBO) is a generalization of a quadratic unconstrained binary optimization (QUBO) problem where the total degree of terms can be more than two. Recently, QUBO problems have gained interest in its ability to be applied to a variety of different applications. More specifically, in part due to its association with the Ising problem in physics, the QUBO model has emerged as an underpinning of the quantum computing area known as quantum annealing and has become a subject of study in a variety of different applications including pattern matching and neuromorphic computing. Although extensive research has been devoted to the potential of the QUBO model and its effectiveness as an alternative to traditional modeling and solution methodologies, HOBO models have not been as extensively studied and there are few, if any, approaches to solving such problems.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method for converting a Higher Order Binary Optimization (HOBO) problem into a Quadratic Unconstrained Binary Optimization (QUBO) problem is described. The method may include creating a data structure of key-value pairs by sorting the plurality of indices of the variables of the HOBO problem, a key in each of the key-value pairs corresponds to all possible combinations of quadratic terms appearing in the HOBO problem and a value in each of the key-value pairs corresponds to all terms of at least degree three that contain an associated key. The method also may include, for each key of the data structure, performing a quadratization process including identifying a key of the key-value pairs with the largest number of associated values, replacing the identified key with an auxiliary variable, updating the keys and values of the key-value pairs of the data structure so as to correspond with the replacement of the auxiliary variable, deleting all degree three terms which involved the identified key in the HOBO from the data structure. The quadratization process may also include, upon a determination that all values of the identified key have been deleted, deleting the identified key from the data structure, and storing the auxiliary variable and a quadratic term of the identified key the auxiliary variable replaced as a pair in a data map. Additionally the method may also include constructing a quadratic polynomial for each pair in the data map.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to converting a Higher Order Binary Optimization problem (HOBO) into a Quadratic Unconstrained Binary Optimization problem (QUBO);
FIG. 2 illustrates an example operational flow;
FIG. 3 illustrates another example operational flow;
FIG. 4 illustrates an example computing system that may be configured to assist in performing the HOBO problem to QUBO problem conversion;
FIG. 5A is a flowchart of an example method for performing the HOBO problem to QUBO problem conversion; and
FIG. 5B is another flowchart of an example method for performing the HOBO problem to QUBO problem conversion.

### DESCRIPTION OF EMBODIMENTS

Higher order binary optimization (HOBO) is a discrete optimization problem that aims to minimize a polynomial over binary variables. Such binary optimization problems are viewed in either Ising space, where the variables are values in the set of {-1,+1} or Boolean space, where the variables are in the set of {0,1}. Both spaces are considered equivalent, however in that they can be interconverted using linear translation and the addition of constraints.

Consequently, a HOBO problem can be represented as: $minimize : q \left(x\right) = q \left({x}_{1},{x}_{2},…,{x}_{n}\right) ,$ where either *x* ∈ {0,1}*ⁿ*, when viewed in Boolean space or *x* ∈ {-1, + 1}*ⁿ*, when viewed in Ising space.

HOBO problems are ubiquitous in combinatorial optimization, machine learning, mathematical programming, and a variety of other applications. They are particularly useful in modeling practical problems. For example, Boolean satisfiability can be modeled as a HOBO problem in Boolean space. Additionally, solving a set of linear equations in Boolean space, can be modeled as a HOBO in Ising space. The difficulty in HOBO problem modeling, however, is that, one can assume without loss of generality that there are no constraints or conditions that the solution must satisfy. As such, computationally, the class of such problems are intractable or unsolvable since a QUBO problem is a special case of HOBO problem.

One technique for solving a HOBO problem is to utilize the face that the optimization is done over binary variables which allows the conversion of any HOBO problem into a QUBO problem with the addition of auxiliary variables. One difficulty with such a solution, however, is that typically the number of auxiliary variables increase exponentially with the number of original variables.

In contrast to a HOBO problem, a QUBO problem is a binary optimization problem where any term in the objective function is either linear or quadratic: $minimize : {\sum }_{\left\{i, j\right\} ∈ E} {A}_{ij} {x}_{i} {x}_{j} {\sum }_{i = 1}^{n} {b}_{i} {x}_{i} ,$ where either *xᵢ* ∈ {0, 1}*ⁿ*, when viewed in Boolean space or *xᵢ* ∈ {-1, + 1}*ⁿ*, when viewed in Ising space, for all *i* ∈ {1, 2, ..., *n*}.

Currently, several difficult combinatorial optimization problems are modeled by QUBO problems. For example, https://www.sumofsquares.org/public/lec02-1 maxcut.html discusses three NP-hard optimization problems which can be phrased by optimizing a quadratic polynomial. One specific method described on the website includes the ability to formulate a maxcut, or for any graph, a bipartition of the vertex set that cuts as many edges as possible as a polynomial optimization problem.

Although there have been previous attempts to convert HOBO problems into QUBO problems, this process has various challenges which make the conversion difficult. More particularly, the conversion requires minimizing or maximizing a general polynomial which faces a variety of challenges, including the absence of readily exploitable properties, difficulties in visualizing the optimization, and finally, that even in compact sets, the optimization problem can be intractable or impossible to solve.

As is described herein, however, over binary variables, the HOBO problem to QUBO problem conversion provides an improved modeling technique over methods and systems currently known and used in the art. More particularly, by constraining the binary variables to real numbers in a same range, a variety of options for performing the modeling are made available. Further, approximation strategies, improved heuristic techniques, are improved and the problems are geometrically easier to visualize. Further, techniques from linear algebra are able to be used and there are more tractable optimization strategies, and there are situations where rounding or approximations are available which ensure a close-to-optimal solution.

The main difficulty in performing the HOBO problem to QUBO problem conversion, however, is that in some instances, the number of auxiliary variables increase exponentially during the conversion process. As such, in some instances, there can be problems where the number of variables blows up or becomes too large to be easily solved. With the improved processing power that is becoming more readily available along with improved computing devices, however, this difficulty may not be an impossible obstacle to these conversions.

Binary optimization problems can be represented in both Ising space and Boolean space and are interchangeable using the following affine transform: $y = 1 - 2 x$ where *x* ∈ {0,1} and *y* ∈ {-1, +1}.

The process of converting a HOBO problem into a QUBO problem in Boolean space has been extensively studied but thus far the HOBO problem to QUBO problem conversion in Ising space has been neglected. Despite this, Ising space has become ubiquitous in many fields, ranging from quantum chemistry, quantum physics, computer science, combinatorics, and others.

Furthermore, a sparse HOBO problem in Ising space can lead to a dense HOBO problem in Boolean space, which in turn requires more auxiliary variables to convert the dense HOBO problem in Boolean space into a QUBO problem in Boolean space. For example, consider the following equation: ${\prod }_{i = 1}^{n} {x}_{i} = {\prod }_{i = 1}^{n} \left(1-2{y}_{i}\right) =$

In the given equation, the left-hand side of the given equation requires far fewer auxiliary variables than the right-hand side of the equation. As such, for this particular equation is better suited to the possibility of a conversion to a QUBO problem in Ising space.

### Conversion of HOBO Problem to QUBO Problem over Boolean Space

For the following HOBO problem in Boolean space: ${x}_{1} {x}_{2} {x}_{3} {x}_{4} + {x}_{1} {x}_{2} \left(1-{x}_{4}\right)$

For a first step, *y*₁ = *x*₁*x*₂ and *y*₂ = *x*₃*x*₄ may be substituted into the HOBO problem to reduce it to a quadratic constrained binary optimization (QCBO) problem. As such, the resulting equation becomes: ${y}_{1} {y}_{2} + {y}_{1} \left(1-{x}_{4}\right) .$

Following the reduction to the QCBO problem, the constraints *y*₁ = *x*₁*x*₂ and *y*₂ = *x*₃*x*₄ are enforced in the objective function using polynomials such that, if a constraint is satisfied, the contribution to the objective function is zero. Conversely, if the constraint is not satisfied, the contribution to the objective function is positive. Using this step, the polynomials introduced have constant, linear or quadratic terms.

As a solution, the Rosenberg polynomial can be applied, which is a quadratic polynomial which attains minimum value only when the target auxiliary variable equals *x*₁*x*₂*.* The Rosenberg polynomial is as follows: $p \left({y}_{1}, {x}_{1}, {x}_{2}\right) = 3 {y}_{1} + {x}_{1} {x}_{2} - 2 {y}_{1} {x}_{1} - 2 {y}_{1} {x}_{2} .$ (equation 1)

### Conversion of HOBO Problem to a QUBO Problem over Ising Space

For the following HOBO problem in Ising space: ${x}_{1} {x}_{2} {x}_{3} {x}_{4} + {x}_{1} {x}_{2} \left(1-{x}_{4}\right)$

For a first step, *y*₁ = *x*₁*x*₂ and *y*₂ = *x*₃*x*₄ may be substituted into the HOBO problem to reduce it to a quadratic constrained binary optimization (QCBO) problem. As such, the resulting equation becomes: ${y}_{1} {y}_{2} + {y}_{1} \left(1-{x}_{4}\right) .$

Following the reduction to the QCBO problem, the constraints *y*₁ = *x*₁*x*₂ and *y*₂ = *x*₃*x*₄ are enforced in the objective function using polynomials such that, if a constraint is satisfied, the contribution to the objective function is zero. Conversely, if the constraint is not satisfied, the contribution to the objective function is positive. Using this step, the polynomials introduced have constant, linear or quadratic terms.

One of the objectives of some embodiments of the present invention is to provide a quadratic polynomial which attains a minimum value in Ising space only when the target auxiliary variable *y*₁ = *x*₁*x*₂*.* As is described herein, merely expressing *y* as an auxiliary variable leads to an infeasible system of inequalities.

More particularly, the objective is to construct a quadratic polynomial *p*, such that: $∀ {x}_{1} , {x}_{2} ∈ \left\{+1,-1\right\} : y = {x}_{1} {x}_{2} ⇒ p \left({x}_{2}, {x}_{2}, y\right) = 0$ $∀ {x}_{1} , {x}_{2} ∈ \left\{+1,-1\right\} : y = - {x}_{1} {x}_{2} ⇒ p \left({x}_{1}, {x}_{2}, y\right) = \geq 1$ Let: $p \left({x}_{1}, {x}_{2}, y\right) = {α}_{0} + {α}_{1} {x}_{1} + {α}_{2} {x}_{2} + {α}_{3} y + {α}_{12} {x}_{1} {x}_{2} + {α}_{13} {x}_{1} y + + {α}_{23} {x}_{2} y = \left(\begin{matrix}1 & {x}_{1} & {x}_{2} & y & {x}_{1} {x}_{2} & {x}_{1} y & {x}_{2} y\end{matrix}\right) \left(\begin{matrix}{α}_{0} \\ {α}_{1} \\ {α}_{2} \\ {α}_{3} \\ {α}_{12} \\ {α}_{13} \\ {α}_{23}\end{matrix}\right) {=}^{def} XA$ The set of equality conditions results in: $EA {=}^{def} \left(\begin{matrix}1 & - 1 & - 1 & 1 & 1 & - 1 & - 1 \\ 1 & - 1 & 1 & - 1 & - 1 & 1 & - 1 \\ 1 & 1 & - 1 & - 1 & - 1 & - 1 & 1 \\ 1 & 1 & 1 & 1 & 1 & 1 & 1\end{matrix}\right) A = {0}^{4 \times 1}$ As such, *A* is in the right kernel of *E*, which is given by the following basis vectors: $K {=}^{def} \left(\begin{matrix}0 & 0 & 0 \\ 1 & 0 & 0 \\ 0 & 1 & 0 \\ 0 & 0 & 1 \\ 0 & 0 & - 1 \\ 0 & - 1 & 0 \\ - 1 & 0 & 0\end{matrix}\right) A {=}^{def} KD$ The resulting inequity conditions are as follows: $FA {=}^{def} \left(\begin{matrix}1 & - 1 & - 1 & - 1 & 1 & 1 & 1 \\ 1 & - 1 & 1 & 1 & - 1 & - 1 & 1 \\ 1 & 1 & - 1 & 1 & - 1 & 1 & - 1 \\ 1 & 1 & 1 & - 1 & 1 & - 1 & - 1\end{matrix}\right) A \geq {1}^{4 \times 1} ⇔ FKD \geq {1}^{4 \times 1} ⇔ \left(\begin{matrix}- 2 & - 2 & - 2 \\ - 2 & 2 & 2 \\ 2 & - 2 & 2 \\ 2 & 2 & - 2\end{matrix}\right) D \geq {1}^{4 \times 1}$

It can be observed that the sum of the four entries of *FKD* is zero. As such, they can't all be greater to or 1. Hence, there is no feasible solution.

Nevertheless, one advantage of embodiments described herein is the construction of a quadratic polynomial *p*, which provides a feasible solution. More specifically, it is possible to add an extra "dummy" variable *d* to find a solution. In order to do so, the following two conditions are expressed:
1: When *y* = *x*₁*x*₂, then for some choice of *d,* the polynomial should be equal to 0.
2: When *y* ≠ *x*₁*x*₂, then for all choices of *d,* the polynomial should be positive.

In order to construct a quadratic polynomial p, such that: $∀ {x}_{1} , {x}_{2} ∈ \left\{+1,-1\right\} : ∃ d ∈ \left\{+1,-1\right\} : y = {x}_{1} {x}_{2} ⇒ p \left({x}_{1}, {x}_{2}, y\right) = 0$ $∀ {x}_{1} , {x}_{2} , d ∈ \left\{+1,-1\right\} : y = - {x}_{1} {x}_{2} ⇒ p \left({x}_{1}, {x}_{2}, y, d\right) \geq 1$

For each choice of *d* as a function of *x*₁ and *x*₂, the recited constraints give rise to a linear system of inequalities. From the 16 choices of feasible solutions, it is submitted that *SageMath*, an open-source mathematical software system, that the following system is a solution: $p \left({x}_{1}, {x}_{2}, y, d\right) = 4 + {x}_{1} + {x}_{2} - y - 2 d + {x}_{1} {x}_{2} - {x}_{1} y - {x}_{2} y - 2 {x}_{1} d - 2 {x}_{2} d + 2 yd$ (equation 2)

The system and methods described herein provide heuristic approaches to converting a HOBO problem to a QUBO problem, offering embodiments in both Ising and Boolean space. As may be understood by one of skill in the art, the systems and methods herein are particularly beneficial when the underlying HOBO problem is sparse in higher order terms.

Embodiments of the present disclosure are explained with reference to the accompanying drawings.

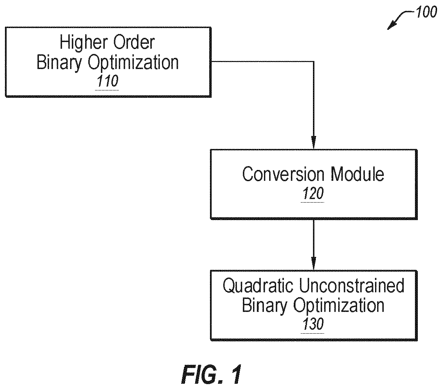

FIG. 1 is a diagram representing an example environment 100 related to performing heuristic conversions of HOBO problems into QUBO problems, arranged in accordance with at least one embodiment described in the present disclosure. As is shown in FIG.1, embodiments herein are directed to a system and method capable of being performed by a conversion module 120, which is capable of receiving an input consisting of a HOBO problem 110 and converting the HOBO problem 110 into a QUBO problem 130. As may be understood by one of ordinary skill in the art, by performing this transformation or conversion, the conversion module 130F may be used independently or in conjunction with a variety of different computing applications which are specifically configured for solving QUBO problems. As such, the ability to perform such conversions expands the ability for HOBO problems, which are prevalent in various fields today, such as physics, computer science, quantum chemistry, quantum physics, combinatorics, and others to be solved using existing systems or without excessive additions in processing power.

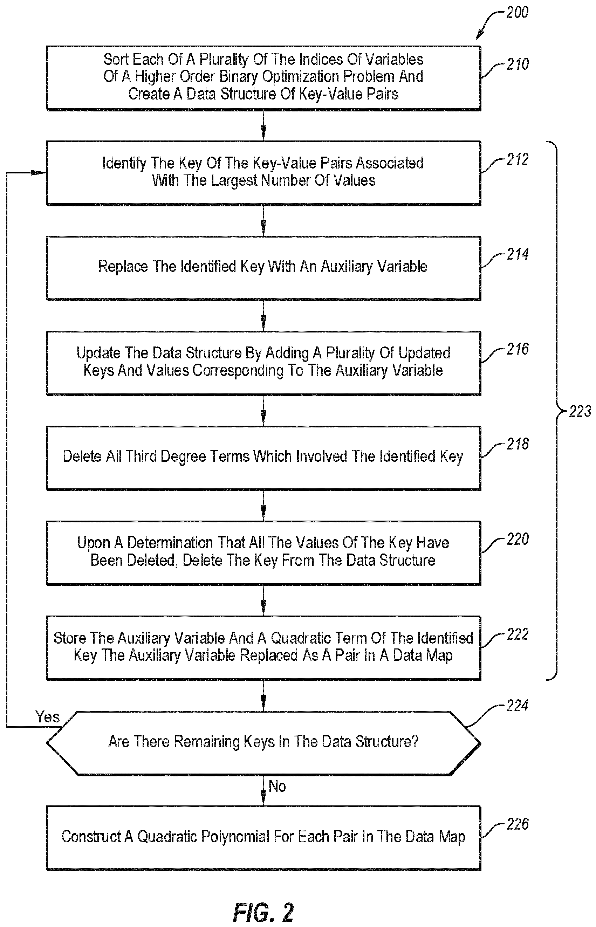

FIG. 2 illustrates an example operational flow 200, according to at least one embodiment of the present disclosure. The operational flow 200 may illustrate an operational flow for converting a HOBO problem into a QUBO problem according to a first embodiment of the invention. For example, the operational flow 200 may illustrate receiving the input of the HOBO problem 110 at a conversion module 120 and generating an output of a QUBO problem 130, which is tractable.

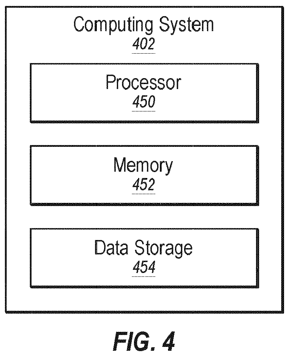

As may be readily understood, although the environment 100 is shown as including a single conversion module 120, it should be understood that the environment 100 may be used in association with other systems configured specifically for utilizing both HOBO problem 110 and QUBO problem 130 in a variety of different applications. As such, the environment 100 may be used in association or as a part of a machine learning environment or other computing environment specifically designed to receive data representing the various fields of, for example, physics, computer science, quantum chemistry, quantum physics, combinatorics, or others and analyze the data as a HOBO problem and/or QUBO problem in order to find a solution. As such, the conversion module 120 may consist of a single, stand-alone computing device, such as the device described more fully below with respect to FIG. 4, of the conversion module 120 may exist as a component or sub-module of another computing device configured to receive, sense, or otherwise create input data to be analyzed as a HOBO problem and/or QUBO problem.

As such, modifications, additions, or omissions may be made to FIG. 1 without departing from the scope of the present disclosure. For example, the environment 100 may include more or fewer elements than those illustrated and described in the present disclosure.

FIG. 4 illustrates a block diagram of an example computing system 402 that may be configured to assist in converting a HOBO problem into a QUBO problem, according to at least one embodiment of the present disclosure. The computing system 402 may be configured to implement or direct one or more operations associated with a conversion module (e.g., the conversion module 120 of FIG. 1) and/or an execution environment (e.g., the execution environment 130 of FIG. 1). The computing system 402 may include a processor 450, a memory 452, and a data storage 454. The processor 450, the memory 452, and the data storage 454 may be communicatively coupled.

In general, the processor 450 may include any suitable special-purpose or general-purpose computer, computing entity, or processing device including various computer hardware or software modules and may be configured to execute instructions stored on any applicable computer-readable storage media. For example, the processor 450 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 4, the processor 450 may include any number of processors configured to, individually or collectively, perform or direct performance of any number of operations described in the present disclosure. Additionally, one or more of the processors may be present on one or more different electronic devices, such as different servers.

In some embodiments, the processor 450 may be configured to interpret and/or execute program instructions and/or process data stored in the memory 452, the data storage 454, or the memory 452 and the data storage 454. In some embodiments, the processor 450 may fetch program instructions from the data storage 454 and load the program instructions in the memory 452. After the program instructions are loaded into memory 452, the processor 450 may execute the program instructions.

The memory 452 and the data storage 454 may include computer-readable storage media for carrying or having computer-executable instructions or data structures stored thereon. Such computer-readable storage media may include any available non-transitory media that may be accessed by a general-purpose or special-purpose computer, such as the processor 350. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other non-transitory storage medium which may be used to carry or store particular program code in the form of computer-executable instructions or data structures and which may be accessed by a general-purpose or special-purpose computer. In these and other embodiments, the term "non-transitory" as explained in the present disclosure should be construed to exclude only those types of transitory media that were found to fall outside the scope of patentable subject matter in the Federal Circuit decision *of In re Nuijten*, 500 F.3d 1346 (Fed. Cir. 2007). Combinations of the above may also be included within the scope of computer-readable media.

Combinations of the above may also be included within the scope of computer-readable storage media. Computer-executable instructions may include, for example, instructions and data configured to cause the processor 450 to perform a certain operation or group of operations.

Modifications, additions, or omissions may be made to the computing system 402 without departing from the scope of the present disclosure. For example, in some embodiments, the computing system 402 may include any number of other components that may not be explicitly illustrated or described.

Returning to FIGS. 2-3, FIG. 2 is a flowchart of an example method 200 that provides a heuristic process for converting a HOBO problem into a QUBO problem, according to at least one embodiment described in the present disclosure. The method 200 may be performed by any suitable system, apparatus, or device. For example, one or more operations of the method 200 may be performed by one or more elements of the environment 100 of FIG. 1 or by the computing system 402 of FIG. 4 or multiples of the computing system 402 of FIG. 4. Although illustrated with discrete blocks, the steps and operations associated with one or more of the blocks of the method 200 may be divided into additional blocks, combined into fewer blocks, or eliminated, depending on the particular implementation.

The method 200 may begin at block 210, where each of a plurality of indices of variables of a HOBO problem are sorted and a data structure of key-value pairs is created. For each key-value pair, the key consists of all possible combinations of quadratic terms that appear within the HOBO problem. The value associated with each key consists of all terms of at least three degrees that contain the associated key.

At block 212, a key of the key-value pairs stored within the data structure is identified which has the largest number of associated values. Upon identification of the key with the largest number of associated values, at block 214, the identified key is replaced with an auxiliary variable.

At block 216, the data structure is updated based on the replacement of the auxiliary variable and new keys and associated values are added in response to the auxiliary variable. In addition, at step 218, all third degree terms that involve the identified key are deleted. At step 220, if a determination is made that all the values of the identified key have been deleted, the identified key is deleted from the data structure.

At step 222, the auxiliary variable and a quadratic term of the identified key are stored as a pair in a data map. Blocks 212-222 are herein referred to as a collective quadratization process 223 and are repeated until a determination is made at step 224 that all the keys, or remaining possible combinations of quadratic terms in the HOBO problem have been deleted from the data structure created at step 210. At step 226, a quadratic polynomial is constructed for each pair in the data map.

As was previously described, embodiments herein are capable of generating a quadratic polynomial in both Ising and Boolean space. More particularly, at step 226, depending on whether the desired output is for Boolean space or Ising space, either Equation (1) or Equation (2) described herein, may be applied, respectively to generate a quadratic polynomial for each pair in the data map.

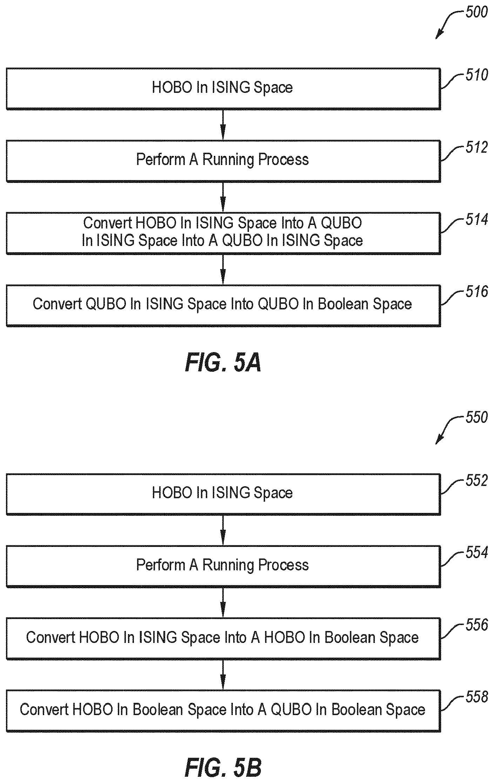

Modifications, additions, or omissions may be made to the method 200 without departing from the scope of the present disclosure. For example, the operations of method 200 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the disclosed embodiments. For example, as is described more fully below with respect to FIG. 5, the above method 200 may also be used in association with a pruning process or include a conversion from Ising to Boolean space or from Boolean to Ising space using an affine transformation such as the transformation described above in addition to the steps of the method 200 described above.

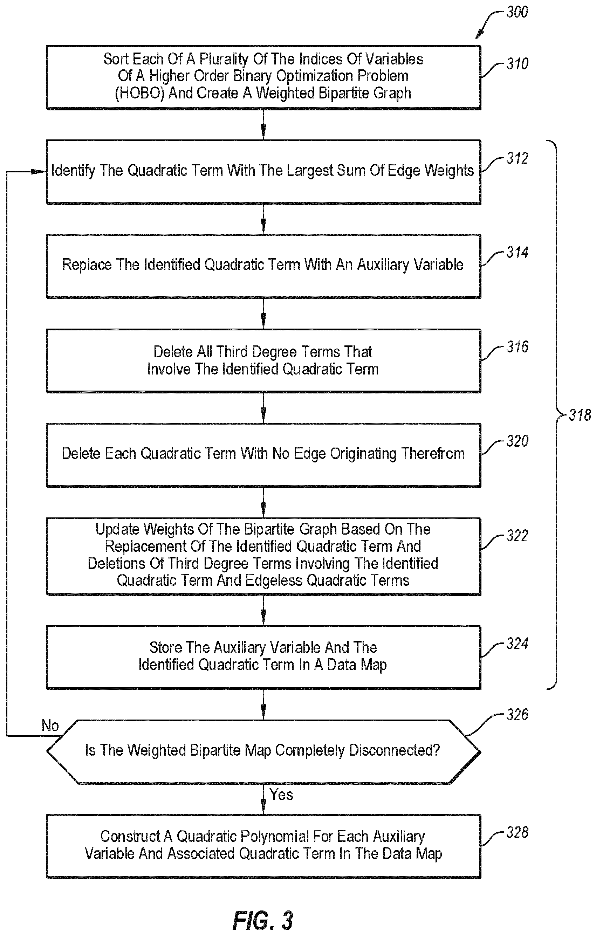

FIG. 3 is a flowchart of another example method 300 of an alternative heuristic approach to converting a HOBO problem into a QUBO problem, according to at least one embodiment described in the present disclosure. The method 300 may be performed by any suitable system, apparatus, or device. For example, one or more operations of the method 300 may be performed by one or more elements of the environment 100 of FIG. 1, by the computing system 402 of FIG. 4, or multiples of the computing system 402 of FIG. 4. Although illustrated with discrete blocks, the steps and operations associated with one or more of the blocks of the method 500 may be divided into additional blocks, combined into fewer blocks, or eliminated, depending on the particular implementation.

As may be understood, the method 300 uses a bipartite graph to convert the HOBO problem into a QUBO problem, whereas the method 200 of FIG. 2 utilized a data structure of key-value pairs. As such, FIG. 3 illustrates the ability to perform the systems and methods herein using an alternative heuristic computer science system. It should be understood that a variety of different graphing, modeling, and/or data structures may be used without departing from the meaning and scope of the invention and the description of methods 200 and 300 are not meant to limit the scope of the claims.

The method 300 may begin at block 310, where each of a plurality of indices of variables of a HOBO problem are sorted and a weighted bipartite graph is created. In the weighted bipartite graph, all possible combinations of quadratic terms appearing in the HOBO problem may be situated as left nodes and all monomials in the HOBO problem are situated as right nodes, where edges exist in the bipartite graph when a monomial contains a given quadratic term, and edge weights are represented as the degree of the monomial.

At block 312, a quadratic term of the all possible combinations of quadratic terms appearing in the HOBO problem is identified which has the largest sum of edge weights. Upon identification of the quadratic term with the largest sum of edge weights, at block 314, identified quadratic term is replaced with an auxiliary variable.

At block 316, all third degree terms that involved the identified quadratic term are deleted. At block 320, all quadratic terms are deleted upon a determination that there is no edge originating from the node associated therewith.

At block 322, the weights and graph of the bipartite graph are updated by adding new quadratic terms which correspond to the new variable and performing the deletion processes performed at blocks 316 and 320.

At step 324, the auxiliary variable and a quadratic term associated therewith are stored as a pair in a data map. Blocks 312-322 are herein referred to as a collective quadratization process 318 and are repeated until a determination is made at step 326 that the weighted bipartite map is completely disconnected. At step 328, a quadratic polynomial is constructed for each pair in the data map.

As was previously described, embodiments herein are capable of generating a quadratic polynomial in both Ising and Boolean space. More particularly, at step 328, depending on whether the desired output is for Boolean space or Ising space, either Equation (1) or Equation (2) described herein, may be applied, respectively to generate a quadratic polynomial for each pair in the data map.

Modifications, additions, or omissions may be made to the method 300 without departing from the scope of the present disclosure. For example, the operations of method 300 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the disclosed embodiments. For example, as is described more fully below with respect to FIG. 5, the above method 200 may also be used in association with a pruning process or include a conversion from Ising to Boolean space or from Boolean to Ising space using an affine transformation such as the transformation described above in addition to the steps of the method 300 described above.

As indicated above, the embodiments described in the present disclosure may include the use of a special purpose or general purpose computer (e.g., the processor 450 of FIG. 4) including various computer hardware or software modules, as discussed in greater detail below. Further, as indicated above, embodiments described in the present disclosure may be implemented using computer-readable media (e.g., the memory 452 or data storage 454 of FIG. 4) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as obj ects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

In addition to the embodiments described above, it should be understood that additional steps or processes may be used to prune or place constraints on the conversion from a HOBO problem to a QUBO problem. More particularly, in Boolean space, when minimizing a HOBO, for negative terms, quadratization may be achieved using only one variable. More particularly, the following monomial with a negative coeffient: ${\prod }_{i = 1}^{n} {x}_{i}$ The monomial can be replaced by the following: $\left(n-1\right) y - {\sum }_{i = 1}^{n} {x}_{i} y$

Although there is not a similar simplification for positive terms, and there is not an analogue in Ising space, the above equivalence may be used together with the methods described with respect to FIG.2 and FIG.3 to convert the HOBO problem to a QUBO problem in Boolean space.

As may be understood, one of the advantages described herein is the ability to use such a general purpose computing system to perform at least some aspects of the methods described herein. More particularly, the embodiments described herein are able to be performed in a relatively computationally efficient manner, which results in tractable QUBO problems which are better suited for finding solutions than is previously available in the art.

FIGS. 5A and 5B are each flowcharts which illustrate additional embodiment for converting a HOBO problem into a QUBO problem which includes a pruning process so as to reduce the number of variables and terms in a HOBO problem in order to further limit the number of variables and terms of the resulting QUBO problem. Further, each of the methods 500 and 550 shown in FIGS. 5A and 5B, respectively, illustrate two separate strategies for the process of converting the HOBO problem into the QUBO problem across Ising and Boolean space, according to at least one embodiment described in the present disclosure.

The methods 500 and 550 may be performed by any suitable system, apparatus, or device. For example, one or more operations of the method 300 may be performed by one or more elements of the environment 100 of FIG. 1, by the computing system 402 of FIG. 4, or multiples of the computing system 402 of FIG. 4. Although illustrated with discrete blocks, the steps and operations associated with one or more of the blocks of the methods 500 and 550 may be divided into additional blocks, combined into fewer blocks, or eliminated, depending on the particular implementation.

The method 500 of FIG. 5A may begin at block 510, where a HOBO problem in Ising space is inputted or received. At block 512, a pruning process is performed on the HOBO problem in order to reduce the number of variables and terms to find a solution of the HOBO problem within a given error bound. An example of a pruning process which may be performed as an example of or in associated with the pruning process performed at block 512 is described more fully below.

At block 514, the HOBO problem in Ising space is converted into a QUBO problem in Ising space using, for example one of the methods 200 or 300, described above, using, for example, Equation (2) in block 226 and/or block 328. At block 516, the resulting QUBO problem in Ising space is then converted into a QUBO problem in Boolean space using any number of techniques, including those described herein.

The method 550 of FIG. 5B may begin at block 552, where a HOBO problem in Ising space is inputted or received. At block 552, a pruning process is performed on the HOBO problem in order to reduce the number of variables and terms to find a solution of the HOBO problem within a given error bound. An example of a pruning process which may be performed as an example of or in associated with the pruning process performed at block 552 is described more fully below.

At block 556, the HOBO problem in Ising space is converted into a HOBO problem in Boolean space using any number of known techniques, including the affine transformation described herein. At block 558, the HOBO problem in Boolean space is converted into a QUBO problem in Boolean space, using, for example one of the methods 200 or 300, described above, using, for example, Equation (1) in block 226 and/or block 328.

With respect to the pruning process, any number of pruning processes may be used so as to limit the variables, terms, or maximum degree of the HOBO problem. In one pruning process, the HOBO problem and a given error bound, stated as a percentage of an optimal solution to the HOBO problem, may be inputted into, for example, the conversion module 120 shown in Figure 1.

Using in part, an assumption that the optimal minimum value is negative, an error tolerance may be established by finding a lower bound of the minimum value. For Boolean optimization, the sum of all negative coefficient values is a valid lower bound. For Ising optimization, negation of a sum of absolute values of all coefficients is a valid lower bound.

In some embodiments, the optimization problem of the HOBO program may be relaxed to solve the continuous optimization problem to establish a lower bound on minima.

The error tolerance can be set to equal the product of the lower bound of the minimum and the error bound divided by 100.

Subsequently, the terms with small absolute coefficients may be identified and dropped by sorting the terms in increasing order according to the absolute value of the coefficients, and deleting the initial terms with the smallest absolute value until the sum of the remaining absolute values of the coefficients reach the error tolerance.

In addition, the pruning process may include the elimination of trivial variables, if for some variable coefficient corresponding to a linear term is bigger than some absolute value of all other terms where the variable is present, then the value of the variable can be trivially guessed.

As a result of the pruning process described above it can be reasonably inferred that the optimal solution of the pruned HOBO problem is within the error bound of the optimal solution of the original HOBO problem. Consequently, the pruning process described above may be performed in addition to the HOBO problem to QUBO problem conversion described above so as to result the expansion or blow up of the number of variables and terms that in the resulting QUBO problem and to further assist in finding an acceptable solution to the HOBO problem as computationally and efficiently as possible.

The embodiments described herein provide the ability for HOBO problems to be easily and efficiently converted into QUBO problems which are better suited for finding solutions. As may be understood, this ability to convert HOBO problems to more tractable problems have numerous applications. For example, in computational complexity theory, the propositional satisfiability problem (SAT) and the maximum satisfiability problem (MAX-SAT) are commonly known and are examples of a higher order Boolean Optimization problems. Other known HOBO problems, particularly those in Ising space, are known and are important for modeling molecular interactions in complex molecules. As such, the embodiments and systems described herein have a variety of different applications and offer benefits which are not currently available in the art.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method of converting a Higher Order Binary Optimization (HOBO) problem into a Quadratic Unconstrained Binary Optimization (QUBO) problem, the method comprising:
creating a data structure of key-value pairs by sorting a plurality of indices of variables of the HOBO problem, a key in each of the key-value pairs corresponds to all possible combinations of quadratic terms appearing in the HOBO problem and a value in each of the key-value pairs corresponds to all terms of at least degree three that contain an associated key;
for each key of the data structure, performing a quadratization process including:
identifying a key of the key-value pairs with a largest number of associated values;
replacing the identified key with an auxiliary variable,
updating each key and value of each of the key-value pairs of the data structure so as to correspond with the auxiliary variable,
deleting all degree three terms which involve the identified key in the HOBO problem from the data structure,
upon a determination that all values of the identified key have been deleted, deleting the identified key from the data structure, and
storing the auxiliary variable and a quadratic term of the identified key as a pair in a data map; and
constructing a quadratic polynomial for the pair in the data map.

2. The method of claim 1, wherein the HOBO problem is represented in Boolean space, and the quadratic polynomial is obtained by the following equation:
*p*(*y*₁, *x*₁, *x*₂) = 3*y*₁ + *x*₁*x*₂ - *2y*₁*x*₁ - *2y*₁*x*₂, where the auxiliary variable *y*₁ equals *x*₁*x*₂.

3. The method of claim 1, wherein the HOBO problem is represented in Ising space and prior to constructing the quadratic polynomial, the HOBO problem is converted into Boolean space, and the quadratic polynomial is obtained by the following equation:
*p*(*y*₁, *x₁*, *x*₂) = 3*y*₁ + *x*₁*x*₂ - 2*y*₁*x*₁ - 2*y*₁*x*₂, where the auxiliary variable *y*₁ equals *x*₁*x*₂*.*

4. The method of claim 1, wherein the HOBO problem is represented in Ising space, and the quadratic polynomial is also represented in Ising space and is obtained by the following equation:
*p*(*x*₁, *x*₂*, y, d*) = 4 + *x*₁ + *x*₂ - y - 2*d* + *x*₁*x*₂ - *x*₁y *- x*₂*y -* 2*x*₁*d* - 2*x₂d* + 2yd, where the auxiliary variable *y*₁ equals *x*₁*x*₂ and *d* is a dummy variable.

5. The method of claim 4, further comprising converting the quadratic polynomial in Ising space into a quadratic polynomial in Boolean space.

6. The method of claim 1, further consisting of performing a pruning process on the HOBO problem prior performing to the quadritization process so as to reduce the number of variables, terms, or maximum degrees of the HOBO problem.

7. The method of claim 6, wherein the pruning process consists of establishing an error tolerance by finding a lower bound of minimum value of the HOBO problem.

8. The method of claim 6, wherein the pruning process consists of deleting terms from the HOBO problem with absolute coefficients which are less than a predetermined value.

9. A method of converting a Higher Order Binary Optimization (HOBO) problem into a Quadratic Unconstrained Binary Optimization (QUBO) problem, the method comprising:
creating a weighted bipartite graph by sorting a plurality of indices of variables of the HOBO problem, one of left or right nodes represent all possible combinations of quadratic terms of the HOBO problem and the other of the left or right nodes represent monomials, and edges in the weighted bipartite graph exist when a monomial contains a given quadratic term and edge weights are a degree of the monomial minus one;
repeatedly performing a quadratization process until the weighted bipartite graph is disconnected, the quadritization process including:
identifying a quadratic term with a largest sum of edge weights;
replacing the identified quadratic term with an auxiliary variable,
updating the weighted bipartite graph so as to correspond with the auxiliary variable,
deleting all degree three terms which involve the identified quadratic term,
upon a determination that there is no edge originating from the quadratic term, deleting the quadratic term, and
store the auxiliary variable and identified quadratic term as a pair in a data map; and
constructing a quadratic polynomial for the pair in the data map.

10. The method of claim 9, wherein the HOBO problem is represented in Boolean space, and the quadratic polynomial is obtained by the following equation:
*p*(*y*₁, *x*₁, *x*₂) = 3*y*₁ + *x*₁*x*₂ - *2y*₁*x*₁ - *2y*₁*x*₂, where the auxiliary variable *y*₁ equals *x*₁*x*₂.

11. The method of claim 9, wherein the HOBO problem is represented in Ising space and prior to constructing the quadratic polynomial, the HOBO problem is converted into Boolean space, and the quadratic polynomial is obtained by the following equation:
*p*(*y*₁, *x*₁, *x*₂) = 3*y*₁ + *x*₁*x*₂ - *2y*₁*x*₁ - *2y*₁*x*₂, where the auxiliary variable *y*₁ equals *x*₁*x*₂.

12. The method of claim 9, wherein the HOBO problem is represented in Ising space, and the quadratic polynomial is also represented in Ising space and is obtained by the following equation:
*p*(*x*₁,*x₂*,*y,d*) = 4 + *x*₁ + *x*₂ - y - *2d* + *x*₁*x*₂ - *x*₁*y* - *x*₂*y* - 2*x*₁*d* - 2*x*₂*d* + 2yd, where the auxiliary variable *y*₁ equals *x*₁*x*₂ and *d* is a dummy variable.

13. The method of claim 12, further comprising converting the quadratic polynomial in Ising space into a quadratic polynomial in Boolean space.

14. The method of claim 9, further consisting of performing a pruning process on the HOBO problem prior performing to the quadritization process so as to reduce the number of variables, terms, or maximum degrees of the HOBO problem.

15. One or more computer-readable media configured to store instructions that when executed by a system cause or direct the system to carry out the method of any one of claims 1 to 8.

## Amended claims

### Amended claims in accordance with Rule 137(2) EPC.

1. A computer-implemented method (200) of converting a Higher Order Binary Optimization, HOBO, problem into a Quadratic Unconstrained Binary Optimization, QUBO, problem, the method comprising:
creating (210) a data structure of key-value pairs by sorting a plurality of indices of variables of the HOBO problem, a key in each of the key-value pairs corresponds to all possible combinations of quadratic terms appearing in the HOBO problem and a value in each of the key-value pairs corresponds to all terms of at least degree three that contain an associated key;
for each key of the data structure, performing (223) a quadratization process including:
identifying (212) a key of the key-value pairs with a largest number of associated values;
replacing (214) the identified key with an auxiliary variable,
updating (216) each key and value of each of the key-value pairs of the data structure so as to correspond with the auxiliary variable,
deleting (218) all degree three terms which involve the identified key in the HOBO problem from the data structure,
upon a determination that all values of the identified key have been deleted, deleting (220) the identified key from the data structure, and
storing (222) the auxiliary variable and a quadratic term of the identified key as a pair in a data map; and
constructing (226) a quadratic polynomial for the pair in the data map.

2. The method (200) of claim 1, wherein the HOBO problem is represented in Boolean space, and the quadratic polynomial is obtained by the following equation: $p \left({y}_{1}, {x}_{1}, {x}_{2}\right) = 3 {y}_{1} + {x}_{1} {x}_{2} - 2 {y}_{1} {x}_{1} - 2 {y}_{1} {x}_{2} ,$ where the auxiliary variable *y*₁ equals *x*₁*x*₂.

3. The method (200) of claim 1, wherein the HOBO problem is represented in Ising space and prior to constructing the quadratic polynomial, the HOBO problem is converted into Boolean space, and the quadratic polynomial is obtained by the following equation: $p \left({y}_{1}, {x}_{1}, {x}_{2}\right) = 3 {y}_{1} + {x}_{1} {x}_{2} - 2 {y}_{1} {x}_{1} - 2 {y}_{1} {x}_{2} ,$ where the auxiliary variable *y*₁ equals *x*₁*x*₂*.*

4. The method (200) of claim 1, wherein the HOBO problem is represented in Ising space, and the quadratic polynomial is also represented in Ising space and is obtained by the following equation: $p \left({x}_{1}, {x}_{2}, y, d\right) = 4 + {x}_{1} + {x}_{2} - y - 2 d + {x}_{1} {x}_{2} - {x}_{1} y - {x}_{2} y - 2 {x}_{1} d - 2 {x}_{2} d + 2 yd ,$ where the auxiliary variable *y*₁ equals *x*₁*x*₂ and *d* is a dummy variable.

5. The method (200) of claim 4, further comprising converting (516; 556) the quadratic polynomial in Ising space into a quadratic polynomial in Boolean space.

6. The method (200) of claim1, further consisting of preforming (512; 554) a pluning process on the HOBO problem prior performing to the quadritization process so as to reduce the number of variables, terms, or maximum degrees of the HOBO problem.

7. The method (200) of claim 6, wherein the pruning process consists of establishing an error tolerance by finding a lower bound of minimum value of the HOBO problem.

8. The method (200) of claim 6, wherein the pruning process consists of deleting terms from the HOBO problem with absolute coefficients which are less than a predetermined value.

9. One or more computer-readable media (452, 454) configured to store instructions that when executed by a system (402) cause or direct the system (402) to carry out the method of any one of claims 1 to 8.
